# EUROPÄISCHE PATENTSCHRIFT

(11) **EP 4 283 175 B1**
(45) Veröffentlichungstag und Bekanntmachung des Hinweises auf die Patenterteilung: **02.07.2025**
(21) Anmeldenummer: 23175207.2
(22) Anmeldetag: 24.05.2023
(51) Int. Cl.: F16L 37/26, E03F 5/02, E03F 3/04, F16L 37/248

(54) **ROHRLEITUNGSKUPPLUNG**
PIPE COUPLING
RACCORD DE TUYAUTERIE

(30) Priorität: 24.05.2022 DE 202022102865 U
(43) Veröffentlichungstag der Anmeldung: 29.11.2023
(73) Patentinhaber: Funke Kunststoffe GmbH, 59071 Hamm-Uentrop (DE)
(72) Erfinder: Funke, Hans-Günter, 48324 Sendenhorst (DE); Funke, Norbert, 48324 Sendenhorst (DE)
(74) Vertreter: Patentanwälte Olbricht Buchhold Keulertz

(56) Entgegenhaltungen:
- EP-A1- 3 139 078
- EP-A1- 3 696 458
- FR-A1- 2 853 389
- US-A- 1 493 221
- US-A- 2 950 130
- US-A- 3 851 898
- US-A- 5 746 273
- US-A1- 2002 170 990
- US-A1- 2009 050 213

## Beschreibung

Die Erfindung betrifft eine Rohrleitungskupplung.

Die Rohrleitungskupplung ist unterschiedlich einsetzbar und für den Einsatz in einem Schacht geeignet, wobei die Verwendung der Rohrleitungskupplung in einem Schacht eine besonders vorteilhafte Verwendung der Rohrleitungskupplung darstellt, so dass nachfolgend die Rohrleitungskupplung regelmäßig anhand dieses Anwendungsbeispiels erläutert wird.

Als Schacht kommt beispielsweise ein Kanalisationsschacht infrage oder ein Schacht eines Straßeneinlaufs, aber auch in anderen Bereichen der Wasserwirtschaft werden Schächte verwendet. Je nachdem, mit welchen zusätzlichen Stoffen das Wasser belastet ist oder welche anderen Anforderungen an die Wasserführung gestellt werden, kann es erforderlich werden, in einem Schacht Einbauten anzuordnen wie z.B. Filter, Drosselelemente, Geruchsverschlüsse, Notverschlüsse, Schwimmer und dergleichen. Diese Einbauten weisen üblicherweise einen Rohrstutzen auf, mit welchem sie an ein anderes Element anschließen, welches entweder eine Rohrleitung darstellt, deren Ende ebenfalls als Rohrstutzen angesehen werden kann, oder welches je nach Bauform einen Rohrstutzen aufweist, um den Anschluss der Einbauten zu ermöglichen, so dass im Ergebnis stets zwei Kupplungselemente vorliegen, die jeweils einen Rohrstutzen aufweisen und miteinander verbunden werden sollen.

Aus der US 2002 0 170 990 A1, die den am nächsten kommenden Stand der Technik bildet, ist eine Rohrleitungskupplung bekannt, bei der die beiden Rohrstutzen in ihrer miteinander verbundenen Anordnung verriegelt werden können. Hierzu sind in Art einer Bajonettverriegelung an dem Rohrstutzen des einen Kupplungselements zwei Halter in Form von Vorsprüngen um den Umfang des Rohrstutzens verteilt angeordnet, und an dem Rohrstutzen des anderen Kupplungselements ist ein drehbarer Ring mit zwei Haken angeordnet. Der Ring kann um die Mittelachse dieses Rohrstutzens gedreht werden, so dass die Haken wahlweise die Halter hintergreifen oder freigeben.

Aus der US 1 493 221 A ist eine Rohrleitungskupplung bekannt, bei der die beiden Rohrstutzen in ihrer miteinander verbundenen Anordnung verriegelt werden können. Hierzu dient ein Bügel an dem einen Kupplungselement, der über einen Halter in Form eines Vorsprungs an dem anderen Kupplungselement gelegt und dann mittels einer Kniehebelmechanik gespannt werden kann.

Aus der US 2009 0 050 213 A1 ist eine Rohrleitungskupplung bekannt, bei der die beiden Rohrstutzen in ihrer miteinander verbundenen Anordnung verriegelt sind, weil bei der Annäherung der beiden Kupplungselemente Rasthaken des einen Kupplungselements durch komplementäre Öffnungen gesteckt werden, die sich in dem anderen Kupplungselement befinden.

Aus der EP 3 696 458 A1 ist eine Rohrleitungskupplung bekannt, die zusätzlich zu den beiden Kupplungselementen einen U-förmigen Keilbeschlag aufweist. Dieser hintergreift einen Kragen, der an dem Rohrstutzen des einen Kupplungselements angeordnet ist. Eine Zunge des Keilbeschlags erstreckt sich in axialer Richtung bis über das andere Kupplungselement und kann dort mittels einer Schraube festgelegt werden.

Aus der FR 2 853 389 A1 ist eine Rohrleitungskupplung bekannt, bei der die Rohrstutzen der beiden Kupplungselemente jeweils einen umlaufenden Flansch mit einer radial nach außen ragenden Zunge und einer diametral gegenüberliegenden Aufnahmemulde aufweisen. Beide Flansche wirken komplementär miteinander zusammen, so dass die beiden Zungen in die Aufnahmemulden des jeweils anderen Flansches eingesteckt werden können. So sind die beiden Kupplungselemente in axialer Richtung zugfest miteinander verbunden. Rasthaken an den Zungen verhindern radiale Relativbewegungen zwischen den beiden Kupplungselementen, so dass die Zungen nicht unbeabsichtigt aus den Aufnahmemulden gezogen werden können.

Aus der EP 3 139 078 A1 ist eine Rohrleitungskupplung bekannt, bei der die beiden Kupplungselemente am Umfang ihrer jeweiligen Rohrstutzen jeweils teilweise eine Aufnahmenut und teilweise einen Kragen aufweisen, welche komplementär miteinander zusammenwirken. Die Kragen der beiden Kupplungselemente können jeweils in die Aufnahmenut des jeweiligen anderen Kupplungselements eingreifen, so dass die beiden Kupplungselemente in axialer Richtung zugfest miteinander verbunden sind. Eine äußere, C-förmige Feder kann als federelastischer Sicherungsring außen um die beiden Kupplungselemente gelegt werden, um auch radiale Relativbewegungen zwischen den beiden Kupplungselementen zu verhindern.

Der Erfindung liegt die Aufgabe zugrunde, eine Rohrleitungskupplung anzugeben, die bei Einbauten - insbesondere in einem Schacht - die Möglichkeit bietet, die Einbauten möglichst unkompliziert anschließen zu können, z. B. im Schacht, und bei Bedarf ebenso unkompliziert und schnell entkoppeln und entfernen zu können, z. B. aus dem Schacht.

Diese Aufgabe wird durch eine Rohrleitungskupplung mit den Merkmalen des Anspruchs 1 und eine Verwendung der Rohrleitungskupplung nach Anspruch 11 gelöst. Merkmale der Erfindung werden nachfolgend erörtert, wobei vorteilhafte Ausgestaltungen der Erfindung unter anderem in den Unteransprüchen beschrieben werden.

Die Erfindung schlägt mit anderen Worten vor, eine Rohrleitungskupplung in Art einer Schnellkupplung auszugestalten, die eine unkomplizierte Betätigung bei der Herstellung der Kupplungsverbindung und beim Lösen der Kupplung ermöglicht. Wenn beispielsweise Einbauten aus dem Schacht entfernt werden sollen, um eine Begehung des Schachtes zu ermöglichen, kann dies innerhalb kurzer Zeit erfolgen, und anschließend können die Einbauten genauso unkompliziert und schnell wieder montiert werden. Eine Betätigung der Rohrleitungskupplung von der Geländeoberkante aus, beispielsweise von einer Fahrbahnoberfläche oder dergleichen, ohne in den Schacht einsteigen zu müssen, ist ein wesentlicher Vorteil der Erfindung. In der Praxis erfordert die Montage von Schachteinbauten grundsätzlich noch einen Schachteinstieg des Personals. Dies ist mit einem erheblichen Arbeitsaufwand verbunden, um unter anderen den hohen Anforderungen zur Arbeitssicherheit gerecht werden zu können. Demgegenüber kann vorschlagsgemäß durch die Erfindung auf eine Gasmessung im Schacht verzichtet werden. Ebenso kann die Anzahl des Personals reduziert werden, da kein Personal zur Absicherung während eines etwaigen Schachteinstiegs mehr benötigt wird. Die vorgeschlagene Rohrleitungskupplung reduziert somit den finanziellen und zeitlichen Aufwand erheblich.

Abgesehen davon, die Rohrleitungskupplung in einem Schacht zu verwenden, kann die Rohrleitungskupplung auch in anderen Situationen oder Umgebungen verwendet werden, wo ähnlich wie in einem Schacht beengte Platzverhältnisse insofern herrschen, als dass in axialer Richtung einer Rohrleitung oder eines Rohrstutzens der Bewegungsraum eingeschränkt ist. Dies gilt für die Schächte ebenso wie für Straßenabläufe, und je nach vorgefundener Einbausituation ggf. auch für Rohrleitungen, die außerhalb von Schächten oder Straßenabläufen vorliegen und bei denen unter beengten Platzverhältnissen eine Rohrverbindung erstellt werden muss, wobei die beengten Platzverhältnisse es beispielsweise nicht zulassen, die normale Einsteckbewegung zwischen Rohr und Muffe in axialer Richtung auszuführen. Nachfolgend wird rein beispielhaft und zur Veranschaulichung stets ein Schacht erwähnt, in welchem die Rohrverbindung hergestellt werden soll, ohne jedoch die Erfindung auf Anwendungen ausschließlich in Schächten zu begrenzen.

Vorschlagsgemäß ist ein erstes Kupplungselement vorgesehen, welches im Schacht verbleibt und daher als Festteil bezeichnet wird. Ein zweites Kupplungselement ist an dem Einbauteil vorgesehen, welches in dem Schacht montiert werden soll und dementsprechend frei gehandhabt werden kann, so dass dieses zweite Kupplungselement als Losteil bezeichnet wird. Beide Kupplungselemente weisen jeweils einen Rohrstutzen auf, so dass nach deren Verbindung ein Rohrleitungsabschnitt geschaffen wird, durch den ein Medium wie z.B. Wasser geführt werden kann.

Die beiden Kupplungselemente weisen zusammenwirkende Halteelemente auf, so dass das Losteil, nachdem es an das Festteil herangeführt worden ist, in einer sogenannten Haltestellung gehalten werden kann. Die beiden Kupplungselemente werden in dieser Haltestellung zusammengehalten und der erwähnte Rohrleitungsabschnitt, der durch die beiden Kupplungselemente geschaffen ist, wird dadurch beibehalten.

Die beiden Kupplungselemente weisen Dichtflächen auf, die zusammenwirken, so dass der Rohrleitungsabschnitt für das darin geführte Medium dicht ist. Die beiden Dichtflächen liegen einander also mediendicht an, wenn das Losteil in der Haltestellung an dem Festteil anliegt und an dem Festteil gehalten ist.

Um die Schaffung des Rohrleitungsabschnitts, also die Verbindung der beiden Kupplungselemente, möglichst einfach zu gestalten und eine unkomplizierte Handhabung zu ermöglichen, ist vorschlagsgemäß ein Anschlag vorgesehen, der die Relativbewegung zwischen dem Festteil und dem Losteil quer zur Mittelachse der beiden jeweiligen Rohrstutzen und somit quer zur Mittelachse des Rohrleitungsabschnitts begrenzt. Durch den Anschlag ist sichergestellt, dass die beiden Dichtflächen einander wie gewünscht mediendicht anliegen, wenn das Losteil bis in die Haltestellung geführt worden ist.

Das Losteil weist zudem vorschlagsgemäß einen Handhabungsanschluss auf. Dieser ermöglicht es, eine Handhabe an das Losteil anzuschließen. Beispielsweise kann die Handhabe als Stange ausgestaltet sein, so dass das Losteil von oben, außerhalb des Schachtes, gehandhabt werden kann und an das Festteil herangeführt werden kann. Dadurch dass der Handhabungsanschluss eine wahlweise lösbare Verbindung mit der Handhabe ermöglicht, kann nach der Montage des Einbauelements, jedenfalls aber nach Herstellung der Rohrleitungskupplungsverbindung, wenn das Losteil in seine Haltestellung geführt worden ist, die Handhabe von dem Handhabungsanschluss getrennt werden und entweder bis zur nächsten Benutzung im Schacht gelagert werden, oder sie kann aus dem Schacht entnommen werden und zu einer anderen Montagestelle verbracht werden.

Für den Fall, dass die beiden miteinander verbundenen Kupplungselemente ihre verbundene Position nicht ohne weiteres beibehalten, das Losteil also nicht in seiner Haltestellung verbleibt, bis es ganz bewusst wieder gehandhabt und von dem Festteil entfernt wird, ist die Rohrleitungskupplung erfindungsgemäß so ausgestaltet, dass die beiden Kupplungselemente mithilfe von Verriegelungselementen in dieser Haltestellung fixiert werden, so dass eine unbeabsichtigte Trennung der beiden Kupplungselemente voneinander ausgeschlossen ist. Auf das in seiner Haltestellung befindliche Losteil einwirkende Kräfte, wie sie beispielsweise durch Großniederschlagsereignisse und die dementsprechenden Strömungsverhältnisse, oder aufgrund anderer Umstände im Schacht auftreten können, führen daher nicht dazu, dass sich das Losteil entlang der durch die Führungselemente bestimmten Bahnkurve von dem Festteil abtrennen kann.

Dabei wirkt erfindungsgemäß ein Vorsprung an dem einen Kupplungselement mit einem Haken an dem anderen Kupplungselement zusammen, indem der Haken den Vorsprung hintergreift, wobei wenigstens eines dieser beiden Verriegelungselemente beweglich gelagert ist, beispielsweise schwenkbar. Durch die Beweglichkeit des einen oder auch beider Verriegelungselemente können diese einerseits in eine Riegelstellung gebracht werden, in welcher der Haken den Vorsprung hintergreift, wenn sich das Losteil in seiner Haltestellung befindet. Die beiden Verriegelungselemente können andererseits in eine Freigabestellung gebracht werden, in welcher der Haken den Vorsprung freigibt und die beiden Kupplungselemente einander angenähert oder auch wieder voneinander entfernt werden können.

Erfindungsgemäß ist schließlich der Handhabungsanschluss als Ringöse ausgestaltet, mittels einer Hakenstange gehandhabt werden kann und die mit dem Haken fest verbunden, z.B. verschweißt ist. So kann die Verriegelungsbewegung oder die Öffnungsbewegung des Hakens dadurch bewirkt werden, dass eine Drehbewegung der Hakenstange um ihre Längsachse unmittelbar auf die Ringöse übertragen wird.

Da der Handhabungsanschluss als Öse ausgestaltet ist, so kann er mit branchenüblichen Werkzeugen gehandhabt werden, zum Beispiel mittels einer Stange, die am unteren Ende einen Haken aufweist. Die Stange kann so lang bemessen sein, dass sie die Handhabung des Losteils von außerhalb des Schachtes ermöglicht. Ggf. kann die Stange hierzu mit einem oder mehreren Verlängerungsstücken verlängert und auf die gewünschte Länge gebracht werden, wie dies aus der Praxis bekannt ist, um mittels der Stange Elemente im Schacht von einer Geländeoberkante handhaben zu können, ohne in den Schacht einsteigen zu müssen.

Führungselemente können an den beiden Kupplungselementen angeordnet sein und so ausgestaltet sein, dass sie miteinander zusammenwirken, sobald das Losteil ausreichend nah an das Festteil angenähert ist. Die Führungsteil dienen dann dazu, dass Losteil auf einer definierten Bewegungsbahn weiter an das Festteil heranzuführen, bis das Losteil seine Haltestellung einnimmt, die beiden Kupplungselemente also mediendicht aneinander anliegen und den Rohrleitungsabschnitt bilden.

In einer Ausgestaltung können die Führungselemente an dem einen Kupplungselement einen Vorsprung aufweisen und an dem anderen Kupplungselement einen Schlitz, so dass der Schlitz die gewünschte Bewegungsbahn definiert und der Vorsprung in dem Schlitz geführt ist. Durch diese zusammenwirkenden Führungselemente kann das Losteil in einer definierten Bewegungsbahn bis in die Haltestellung geführt werden.

Vorteilhaft können wenigstens zwei Führungselemente jeweils an dem Losteil als auch an dem Festteil angeordnet sein, um auf diese Weise eine unerwünschte Relativ-Beweglichkeit der beiden Kupplungselemente zueinander möglichst weitgehend auszuschließen und vielmehr sicherzustellen, dass das Losteil zuverlässig entlang einer bestimmten Bewegungsbahn an das Festteil herangeführt werden kann, um anschließend in seiner Haltestellung eine mediendichte Verbindung der beiden Kupplungselemente sicherzustellen.

Um auch unter beengten räumlichen Verhältnissen die Rohrleitungskupplung montieren und demontieren zu können, kann vorgesehen sein, dass das Losteil und das Festteil nicht in axialer Richtung ihrer Rohrstutzen ineinandergesteckt werden, wie dies ansonsten bei Rohrleitungsverbindungen unter Verwendung eines Muffen- und eines Spitz-Endes typisch ist. Stattdessen kann vorgesehen sein, dass das Losteil und das Festteil im Wesentlichen in Art einer Scherbewegung zueinander oder auseinander bewegt werden, also in einer Richtung quer zur jeweiligen Mittelachse. Die Bewegung kann beispielsweise annähernd J-förmig erfolgen, also im Wesentlichen quer zur Mittelachse, wobei zum Schluss der Bewegung auch eine Bewegungskomponente in axialer Richtung ausgeführt wird, um die typischerweise vorhandenen Dichtungen der Los- und Festteile aneinander zu pressen bzw. beim Öffnen der Rohrleitungskupplung zunächst die Dichtungen voneinander zu trennen. Die Reibung der beiden Dichtungen aneinander und ein dadurch ggf. verursachter Verschleiß der Dichtungen, der ansonsten durch die Scherbewegung hervorgerufen werden könnte, wird auf diese Weise minimiert.

In einer Ausgestaltung sind die Verriegelungselemente so geformt, dass beim Öffnen der Verriegelung nicht nur der Riegel von einer zugeordneten Riegelfläche entfernt wird, sondern auch eine Trennungsbewegung des Losteils vom Festteil unterstützt wird. Indem sich der bewegliche Riegel, der an dem einen dieser beiden Kupplungselemente befestigt ist, an dem jeweils anderen Kupplungselement abstürzt und mit zunehmender Öffnungsbewegung des Riegels einen zunehmenden Druck auf das andere Kupplungselement ausübt, wird die Trennung der beiden Kupplungselemente voneinander unterstützt.

Beispielsweise kann eine annähernd keilförmige Kontur an dem Riegel vorgesehen sein und dazu führen, dass während der Öffnungsbewegung des Riegels der Keil zunehmend stärker gegen das jeweils andere Kupplungselement der Rohrleitungskupplung gedrückt wird. Oder es kann eine Wippe an dem einen Kupplungselement angeordnet sein, die sich bis über das jeweils andere Kupplungselement erstreckt, so dass durch Zug an dem einen oder Druck auf den anderen Abschnitt einer solchen Wippe die erwähnte Trennbewegung zwischen den beiden Kupplungselementen unterstützt wird.

Der erwähnte Anschlag, der die Bewegung des Losteils gegenüber dem Festteil begrenzt, kann in einer Ausgestaltung entweder unten am Festteil oder oben am Losteil angeordnet sein. Ausgehend davon, dass die beiden Kupplungselemente jeweils so ausgerichtet sind, dass ihre Mittelachse liegend ausgerichtet ist, ermöglicht eine solche Ausgestaltung des Anschlages, das Losteil in einer abwärts gerichteten Bewegung an das Festteil anzunähern, bis es auf den unten am Festteil befindlichen Anschlag aufsetzt, oder bis sein oben am Losteil befindlicher Anschlag auf dem Festteil aufliegt, wobei in beiden Fällen eine weitere Abwärtsbewegung des Losteils verhindert ist. Als vorteilhaft kann in diesem Zusammenhang angesehen werden, den Anschlag oben am Losteil anzuordnen, weil auf diese Weise der Anschlag nicht fest im Schacht verbleibt, nämlich am Festteil, und dementsprechend sich am Anschlag bei dessen Nichtbenutzung, wenn kein Losteil am Festteil montiert ist, keine Ablagerungen oder dergleichen ansammeln können, die später, wenn ein Losteil an dem Festteil montiert werden soll, ein Hindernis dafür darstellen können, das Losteil bis in seine endgültige Haltestellung führen zu können.

Eine abwärts gerichtete Beweglichkeit des Losteils erleichtert die Handhabung des Losteils. Insbesondere kann so auch aus größerer Entfernung, beispielsweise von außerhalb des Schachtes, die erforderliche Kraft, um das Losteil bis in seine Haltestellung zu führen oder später auch aus seiner Haltestellung wieder zu entfernen, leichter aufgebracht werden als wenn dies in einer horizontalen Bewegungsrichtung erforderlich wäre.

In einer Ausgestaltung definieren die zusammenwirkenden Dichtflächen der beiden Kupplungselemente eine Dichtebene, in der die beiden zusammenwirkenden Dichtflächen einander anliegen, wobei sich diese Dichtebene quer zur Mittelachse des von den beiden Kupplungselementen gebildeten Rohrleitungsabschnitts erstreckt. Auch bei dieser Ausgestaltung geht der vorliegende Vorschlag von der Überlegung aus, dass die beiden Kupplungselemente so ausgerichtet sind, dass ihre Mittelachse im Wesentlichen liegend verläuft, und so dass sich die Dichtebene daher im Wesentlichen vertikal erstreckt. Dementsprechend kann das Losteil in einer abwärts verlaufenden Bewegungsbahn, beispielsweise annähernd senkrecht, an das Losteil herangeführt werden und dabei die beiden Dichtflächen zur Anlage aneinander gebracht werden.

In einer Ausgestaltung kann das Festteil nicht als von vornherein im Schacht befindliches Element ausgestaltet sein, sondern vielmehr als Adapter, der an ein im Schacht befindliches Element angesetzt werden kann. Auf diese Weise kann mittels dieses Adapters die vorschlagsgemäße Rohrleitungskupplung in Art einer Schnellkupplung in einem Schacht verwirklicht werden, auch wenn dessen fest eingebaute Elemente nicht von vornherein die Verwirklichung einer derartigen Schnellkupplung vorsehen. Der Adapter weist einen Kragen auf, der dazu dient, das Festteil mediendicht an einen im Schacht befindlichen Stutzen anzuschließen. Bei diesem Stutzen kann es sich entweder um das Ende einer in den Schacht mündenden Rohrleitung handeln oder um einen Stutzen eines im Schacht befindlichen Einbauelements. Jedenfalls wird mittels des Adapters der im Schacht vorhandene Stutzen so ausgerüstet, dass anschließend in Art einer Schnellkupplung das Losteil auf unkomplizierte Weise und innerhalb kurzer Zeit an den Stutzen, nämlich an das auf dem Stutzen montierte Festteil, angeschlossen oder von diesem gelöst werden kann.

In einer besonders erfinderischen Ausgestaltung ist die Schnellkupplung mit einem Element kombiniert, das sich nicht innerhalb, sondern außerhalb des Schachtes befindet. Bei diesem Element kann es sich beispielsweise um einen Hausanschlussstutzen oder kurz Anschlussstutzen handeln: in diesem Fall wird eine Kernbohrung in einen Schacht oder in ein Hauptrohr eingebracht und seitlich, von außen, ein Anschlussstutzen montiert, wie es z.B. grundsätzlich aus der Praxis bekannt und als "Fabekun Sattelstück" handelsüblich ist, um beispielsweise Medien aus einer Zuleitung (Seitenrohr) in den Schacht bzw. in das Hauptrohr einzuleiten. Im Zusammenhang mit der vorliegenden Erfindung ist es jedoch speziell ausgestaltet, indem es an seinem in den Schacht bzw. in das Hauptrohr ragenden Ende das Festteil der Schnellkupplung aufweist. Alternativ zu der Verwendung eines Sattelstücks kann, nachdem die Kernbohrung eingebracht worden ist, ein Rohrstück durch die Kernbohrung geführt werden, welches an seinem in den Schacht oder Hauptrohr ragenden Ende das Festteil der Schnellkupplung aufweist, und welches gegen die Schachtwand abgedichtet wird, wozu beispielsweise eine Ringraumdichtung verwendet werden kann. Insbesondere in den Fällen, wenn Führungselemente in Art von Vorsprüngen oder Ähnlichem an dem Festteil angeordnet sind, kann es erforderlich sein, den für das Festteil vorgesehenen Rohrstutzen von der Innenseite eines Schachts bzw. eines Hauptrohrs nach Außen durch die Kernbohrung zu führen, so dass weiterhin auf der Außenseite beispielsweise ein Anschlussstutzen oder dergleichen montierbar ist und auf der Innenseite im Schacht bzw. im Hauptrohr das Losteil an dem Festteil gehalten werden kann.

Eine Kombination aus Anschlussstutzen bzw. hineinragendem Rohrstück und dem Festteil der vorgeschlagenen Rohrleitungskupplung eröffnet die Möglichkeit, dass an jeglicher Position Elemente von außen in einen Schacht bzw. in ein Hauptrohr eingeführt werden können und dann im Inneren des Schachtes bzw. des Hauptrohrs jegliche Einbauten oder Gegenstände, wie nachfolgend noch erläutert wird, angekoppelt werden können.

Der vorliegenden Erfindung liegt der wesentliche Gedanke zugrunde, eine einfache und unkomplizierte Rohrleitungskupplung vorzuschlagen. Darüberhinausgehend soll eine Möglichkeit geschaffen werden, für besondere Einbausituationen - wie in Schächten oder bei beengten Raumverhältnissen - eine Kopplung eben auch aus einer Entfernung bewirken zu können, das heißt das handhabende Personal kann eine Kopplung bewirken, ohne sich unmittelbar benachbart zur schaffenden Rohrkopplung aufhalten zu müssen. Ist dieser Abstand zwischen Personal und Rohrkopplung situationsbedingt besonders groß, so dass beispielsweise die Handhabe - wie eine Stange mit endständigem Haken, nicht mehr ohne Weiteres mit dem Handhabungsanschluss verbunden werden kann, kann in einer Weiterentwicklung eine Montagehilfe vorgesehen sein. Besonders vorteilhaft ist dafür ein Verlängerungselement, welches den Handhabungsanschluss beabstandet von dem Losteil hält. Ist beispielsweise ein Einbauelement in einer Schachttiefe von 4 m zu montieren, kann das Verlängerungselement eine Länge von ungefähr 2 m aufweisen. Dem handhabenden Personal wird es dadurch leichter gemacht, eine Verbindung zwischen Handhabe und Handhabungsanschluss herzustellen, insoweit beispielsweise ein Einfädeln eines Hakens einer Handhabe in eine Öse als Handhabungsanschluss in einer Tiefe von 2 m leichter ist als in einer Tiefe von 4 m. Vorzugsweise verwirklicht das Verlängerungselement einen Abstand zwischen Handhabungsanschluss und Losteil von 0,5 bis 4 m, besonders bevorzugt von 0,5 bis 2 m. Insbesondere formstabile Verlängerungselemente, wie eine Stange, ein Stab oder Ähnliches, sind vorteilhaft, um die Herstellung der Rohrkupplung aus der Entfernung weitestgehend kontrollieren zu können. Ein formstabiles Verlängerungselement ist zudem von Vorteil, um, sofern vorgesehen, entsprechend ausgestaltete Verriegelungselemente ebenso aus der Entfernung, insbesondere von einer Geländeoberkante aus, betätigen zu können.

In der Praxis sind viele Schächte, Straßenabläufe und dergleichen anzutreffen, an die alte, vor vielen Jahren verlegte Leitungen anschließen. Immer wieder tritt in der Praxis das Bedürfnis auf, diese alten Rohranschlüsse zu verbessern oder an veränderte Gegebenheiten anzupassen, z. B. einen innenliegenden Absturz nachträglich anzubringen. In einer Ausgestaltung kann daher die Schnellkupplung, insbesondere das Festteil, mit einer Montageplatte versehen sein, die es ermöglicht, die Schnellkupplung innerhalb des Schachtes vor dem an den Schacht anschließenden Altrohr zu montieren, indem nämlich die Montageplatte an der Innenseite der Schachtwand montiert wird. Hierzu kann die Montageplatte beispielsweise mit der Innenseite der Schachtwand verklebt oder - z. B. mit Hilfe von Dübeln - verschraubt werden. In einer anderen Ausgestaltung wird die Montageplatte nicht benötigt, sofern sie vorhanden sein sollte, und kann daher wahlweise auch entfallen. Bei dieser anderen Ausgestaltung weist das Festteil der Schnellkupplung ein Stecksystem auf, welches in das Altrohr gesteckt werden kann und dort befestigt werden kann. Die Befestigung kann beispielsweise mittels Verklebung erfolgen. Da die Innenseite des Altrohrs erfahrungsgemäß in vielen Fällen für eine gründliche Reinigung schlecht zugänglich ist, was die Vorbereitung und / oder die Dauerhaftigkeit einer Verklebung beeinträchtigt, kann die Befestigung in einer Ausgestaltung mechanisch erfolgen, z. B. indem sich das Stecksystem mit Hilfe von Krallen in das Altrohr verkrallt, mit Hilfe eines Dehn- oder Spannelements in dem Altrohr verspannt wird, oder dergleichen.

Typischerweise bilden die beiden Rohrstutzen des Losteils und des Festteils einen Rohrleitungsabschnitt, der von einem Medium durchströmt wird oder zumindest bedarfsweise durchströmt werden kann. Das im Schacht verbleibende Festteil kann jedoch überraschenderweise auch lediglich als Befestigungselement dienen, um einen Gegenstand, der mit dem Losteil verbunden ist und regelmäßig aus dem Schacht entnommen werden soll, zu halten. In diesem Fall muss es sich sowohl bei dem Losteil als auch bei dem Festteil jeweils nicht notwendigerweise um einen Rohrleitungsabschnitt handeln, der von einem Medium durchströmt wird. Der Begriff der Rohrleitungskupplung bezeichnet in diesem Fall lediglich die geometrische Ausgestaltung der beiden Kupplungselemente, die nämlich jeweils einen rohrförmigen Abschnitt in Form des jeweiligen Rohrstutzens aufweisen, was den Kupplungselementen eine hervorragende Formstabilität verleiht. Folglich müssen die beiden Kupplungselemente dafür nicht notwendigerweise zusammenwirkende Dichtflächen aufweisen, da eine mediendichte Anlage des Losteils am Festteil in der Haltestellung nicht für alle Anwendungsfälle erforderlich ist.

Das Festteil kann in diesem Zusammenhang beispielsweise durch Verklebung, Verschraubung oder dergleichen an der Schachtwand oder an einem im Schacht ohnehin befindlichen Einbauelement befestigt sein. Das Losteil kann beispielsweise einen Sensor tragen oder eine Konsole, die ihrerseits zur Befestigung von Geräten der Messtechnik oder von anderen Einbauten dient, so dass das Losteil der Rohrleitungskupplung in all diesen Fällen als Träger für einen jeweils im Schacht anzuordnenden Gegenstand dient. Die Entnahme dieses Gegenstandes zusammen mit dem Losteil aus dem Schacht ermöglicht es, die betreffenden Gegenstände zu Inspektions-, Wartungs-, Reparatur- oder Austauscharbeiten möglichst unkompliziert aus dem Schacht entnehmen zu können, um dann die jeweiligen Arbeiten außerhalb des Schachtes durchführen zu können.

Die Rohrleitungskupplung kann grundsätzlich aus Kunststoff bestehen, insbesondere die beiden Rohrstutzen des Festteils und des Losteils, während jedoch andere Bestandteile wie z.B. Beschlagelemente oder Schrauben, mit denen die Beschlagelemente an den Rohrstutzen befestigt sind, aus Metall bestehen können. Um eine spätere Aufbereitung der Rohrleitungskupplung zu erleichtern, nachdem diese das Ende ihrer Nutzungsdauer erreicht hat, können sämtliche Bestandteile einschließlich der Beschlagelemente der Rohrleitungskupplung aus Kunststoff bestehen. In diesem Fall sind Befestigungselemente wie die erwähnten Schrauben möglicherweise nicht erforderlich, da die aus Kunststoff bestehenden Bestandteile der Rohrleitungskupplung anderweitig fest miteinander verbunden werden können, beispielsweise durch Verklebung, Kalt-, Warm- oder UltraschallVerschweißung. Es kann vorgesehen sein, die Kupplungselemente und/oder weitere einzelne Bauteile jeweils einstückig herzustellen, beispielsweise im Spritzgussverfahren. Ausführungsbeispiele der Erfindung werden anhand der rein schematischen Darstellungen nachfolgend näher erläutert. Dabei zeigt
- Fig. 1: die beiden als Festteil und als Losteil ausgestalteten Kupplungselemente einer nicht erfindungsgemäßen Rohrleitungskupplung im demontierten, voneinander entfernten Zustand,
- Fig. 2: die beiden Kupplungselemente von Fig. 1 im montierten, einen Rohrleitungsabschnitt bildenden Zustand,
- Fig. 3: eine Ansicht ähnlich Fig. 2 auf ein erfindungsgemäßes Ausführungsbeispiel einer Rohrleitungskupplung, und
- Fig. 4: eine perspektivische Ansicht auf ein zweites erfindungsgemäßes Ausführungsbeispiel einer Rohrleitungskupplung.

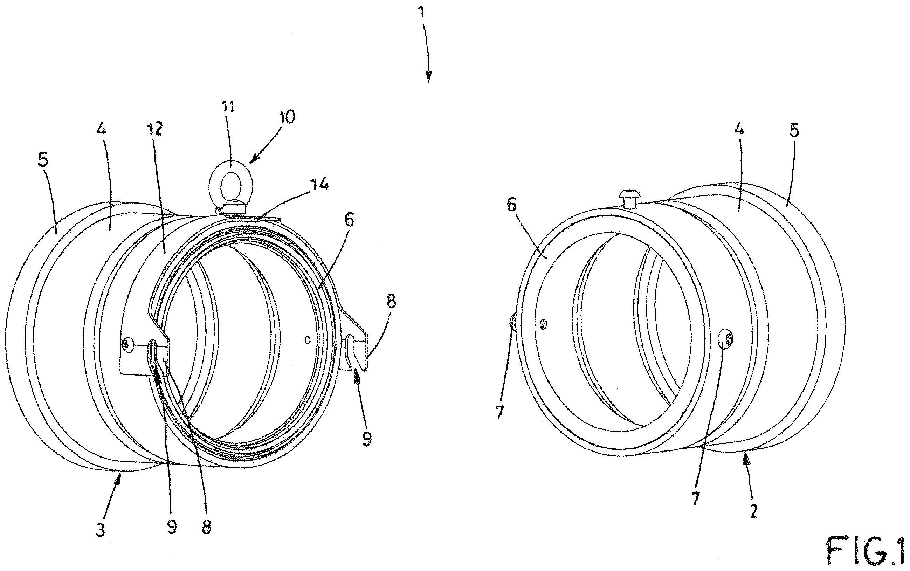

In Fig. 1 sind zwei Kupplungselemente einer Rohrleitungskupplung 1 dargestellt, von denen eines als Festteil 2 und das andere als Losteil 3 bezeichnet ist. Beide Kupplungselemente weisen jeweils einen Rohrstutzen 4 auf und einen Kragen 5. Mittels des jeweiligen Kragens 5 können die beiden Kupplungselemente mit vorhandenen Elementen verklebt werden, so dass sie jeweils mediendicht an dieses vorhandene Element anschließen. Beispielsweise kann das Festteil 2 an ein Ende eines Rohrs angeklebt werden, welches in einen Schacht mündet, und das Losteil 3 kann mittels seines Kragens 5 beispielsweise an den Stutzen eines Filters oder eines ähnlichen Einbauelements geklebt werden. Die beiden Kupplungselemente bilden dann eine Schnellkupplung, die es ermöglicht, das Einbauelement schnell und unkompliziert in dem Schacht montieren bzw. wieder demontieren zu können. Alternativ können eines oder auch beide Kupplungselemente einfach dadurch an ein im Schacht vorhandenes Element bzw. an ein in dem Schacht zu montierendes Einbauelement befestigt werden, dass sie auf ein Rohrstück aufgesteckt werden, wobei z. B. die herkömmliche Rohrdichtung, wie sie bei Muffenverbindungen bekannt ist, zur Abdichtung gegenüber dem jeweiligen Kupplungselement verwendet werden kann, z. B. ein in einer umlaufenden Sicke eingelegter Dichtungsring.

Beide Kupplungselemente weisen jeweils eine Dichtfläche 6 auf, wobei die beiden Dichtflächen 6 zusammenwirken, um einen mediendichten Rohrleitungsabschnitt zu schaffen, wenn die beiden Kupplungselemente miteinander verbunden sind. Die Dichtfläche 6 des Losteils 3 ist bei dem dargestellten Ausführungsbeispiel als Profildichtung mit mehreren Rippen ausgestaltet, und die Dichtfläche 6 wird bei dem dargestellten Ausführungsbeispiel durch ein separates Bauteil bereitgestellt, das als Dichtring aus einem Elastomerwerkstoff hergestellt ist und in den Rohrstutzen 4 des Losteils 3 eingesetzt ist. Bei dem dargestellten Ausführungsbeispiel des Festteils 2 ist die Dichtfläche 6 als Oberfläche eines Rings ausgestaltet, der aus dem gleichen Material wie der Rohrstutzen 4 des Festteils 2 besteht und in den Rohrstutzen 4 eingesetzt ist, wobei das Material beispielsweise ein PVC-Werkstoff sein kann, z. B. ein PVC-U-Kunststoff. Auf diese Weise kann der Rohrstutzen 4 ohne die Erfordernis eines eigenen Formwerkzeugs zur Herstellung des Festteils 2 genutzt werden, was eine wirtschaftliche Fertigung des Festteils 2 unterstützt.

Abweichend von dem dargestellten Ausführungsbeispiel kann die Dichtfläche 6 des Festteils 2 durch den Rohrstutzen 4 selbst geschaffen sein, wenn dieser die dazu geeignete Formgebung aufweist. Oder es kann abweichend von dem dargestellten Ausführungsbeispiel auch für das Festteil 2 vorgesehen sein, dass wie beim Losteil 3 ein Dichtring aus einem Elastomerwerkstoff in den Rohrstutzen 4 eingesetzt ist und die Dichtfläche 6 - hier: des Festteils 2 - bildet.

Im Unterschied zu der Dichtfläche 6 des Losteils 3 bildet die Dichtfläche 6 des Festteils 2 keine Rippen, sondern ist als glatte, ringförmige Stirnfläche des Dichtrings ausgestaltet. Anstelle der Möglichkeit, zwei Elastomer-Dichtungen an den beiden Kupplungselementen zu verwenden oder, im Falle nur einer einzigen Elastomer-Dichtung, diese an dem Festteil vorzusehen, weist das dargestellte Ausführungsbeispiel den Vorteil auf, dass die Verwendung nur einer einzigen Elastomer-Dichtung bedeutet, dass die zweite Dichtfläche durch einen mechanisch robusteren und gegen Beschädigungen unempfindlicheren Werkstoff bereitgestellt werden kann, und dass die einzige, an der Losseite befindliche Elastomer-Dichtung im Bedarfsfall problemlos außerhalb des Schachtes getauscht werden kann, da sie mitsamt dem Losteil 3 aus dem Schacht entnehmbar ist.

Um die Verbindung zwischen den beiden Kupplungselementen herzustellen und die beiden Dichtflächen 6 in eine mediendichte Anlage aneinander zu bringen, sind die beiden Kupplungselemente mit Führungselementen versehen, die zusammenwirken. Das Festteil 2 zwei Vorsprünge 7 auf, die einander gegenüberliegend in horizontaler Richtung vom Festteil 2 nach außen ragen, und wobei das Losteil 3 zwei Laschen 8 aufweist die jeweils mit einem Schlitz 9 versehen sind, welche in der jeweiligen Lasche 8 unten münden. Das Losteil 3 weist in seinem oberen Bereich weiterhin einen Handhabungsanschluss 10 in Form einer Ringöse 11 auf, so dass es mittels einer Hakenstange gehandhabt werden kann, z. B. von außerhalb des Schachtes. Die beiden Laschen 8 sind als Abschnitte eines U-förmigen Bügels 12 ausgestaltet, der sich über die obere Umfangshälfte des Losteils 3 erstreckt und in seinem oberen Bereich, am Scheitelpunkt, einen Anschlag 14 bildet, der über den Rohrstutzen 4 des Losteils 3 hinausragt.

Zur Verbindung der beiden Kupplungselemente miteinander und zur Schaffung eines Rohrleitungsabschnitts wird das Losteil 3 an das Festteil 2 herangeführt, so dass die beiden Stirnenden dieser beiden Kupplungselemente aneinander anliegen, die Mittelachse des Losteils 3 jedoch höher verläuft als die Mittelachse des Festteils 2. Wenn anschließend das Losteil 3 abgesenkt wird, geraten die Laschen 8 des Losteils 3 über die Vorsprünge 7 des Festteil 2, und im weiteren Verlauf werden die Vorsprünge 7 in den Schlitzen 9 aufgenommen. Bei der weiteren Absenkbewegung führen die Schlitze 9 das Losteil 3 so an das Festteil 2 heran, dass die Dichtungsflächen 6 beider Kupplungselemente zusammenwirken und einen mediendichten Anschluss dieser beiden Kupplungselemente aneinander bewirken.

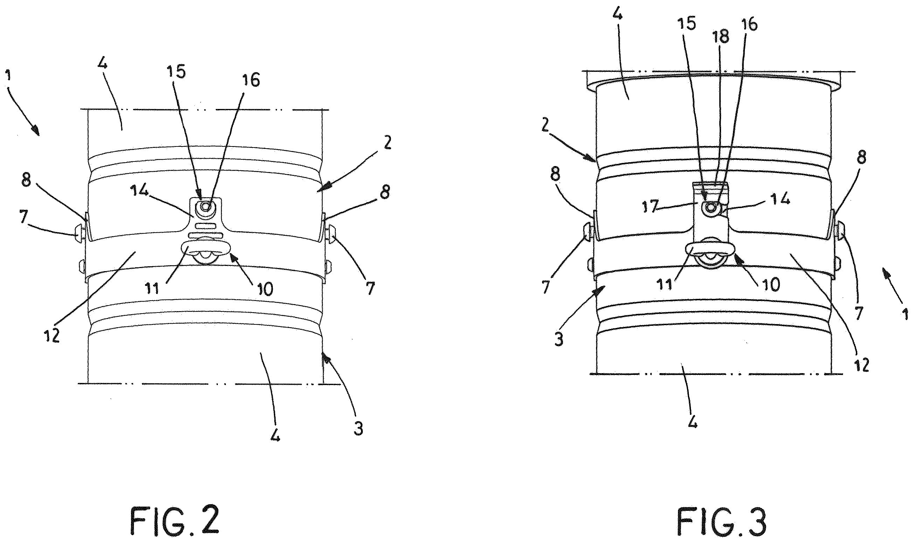

Figur 2 zeigt die beiden Kupplungselemente von Fig. 1 im montierten, einen Rohrleitungsabschnitt bildenden Zustand. Wenn die Vorsprünge 7 an das Ende der jeweiligen Schlitze 9 gelangen, und / oder wenn der Anschlag 14 des Losteils 3 oben auf dem Festteil 2 aufsetzt, ist die Absenkbewegung des Losteils 3 beendet und das Losteil 3 befindet sich in einer Haltestellung, in welcher es an dem Festteil 2 gehalten ist. Um das Losteil 3 in dieser Haltestellung zu sichern, weist der Anschlag 14 eine im wesentlichen D-förmige Aussparung 15 auf, die mit einem Halter 16 des Festteils 2 zusammenwirkt. Ähnlich wie die beiden Vorsprünge 7 ist auch der Halter 16 im Längsschnitt etwa pilzförmig oder T-förmig ausgestaltet. Während bei den Vorsprüngen 7 der jeweilige Kopf einen kreisrunden Querschnitt aufweist, ist der Kopf des Halters 16 an einem Teil seines Umfangs abgeflacht, so dass dort der Anschlag 14 mit dem geradlinigen Abschnitt seiner Aussparung 15 anliegen kann. Auf diese Weise wird das Losteil 3 an dem Festteil 2 gegen Kippbewegungen gesichert, so dass die Dichtflächen 6 beider Kupplungselemente zusammenwirken können und die Bildung eines V-förmigen Spalts zwischen den beiden Dichtflächen 6 vermieden wird. Dies ist beispielsweise dann besonders vorteilhaft, wenn besonders schwere Einbauten im Schacht montiert werden sollen, wie z.B. Edelstahl-Filterpatronen, die zudem mit einem Substrat zur Wasserbehandlung gefüllt sind.

Fig. 3 zeigt eine Ansicht ähnlich Fig. 2 auf ein erfindungsgemäßes Ausführungsbeispiel einer Rohrleitungskupplung 1, die weitgehend wie die Rohrleitungskupplung 1 der Fig. 1 und 2 ausgestaltet ist, so dass vergleichbare Bauelemente mit denselben Bezugsziffern gekennzeichnet sind. Auf dem Anschlag 14 des Losteils 3 ist bei dem zweiten Ausführungsbeispiel ein Haken 17 angeordnet, der um die Befestigungsachse der Ringöse 11 schwenkbar ist und der in Fig. 3 in seiner Riegelstellung dargestellt ist, in welcher er den Kopf des Halters 16 untergreift. Der Haken 17 und der Halter 16 wirken daher als Verriegelungselemente zusammen und verhindern, dass der Anschlag 14 des Losteils 3 unbeabsichtigt nach oben bewegt und von dem Halter 16 getrennt werden kann. Der Haken 17 ist als liegend ausgerichtete Blechlasche ausgestaltet, die an dem von ihrem Schwenklager entfernten Ende aufwärts gekantet ist, so dass der dort aufwärts verlaufende Abschnitt der Blechlasche als Stehlasche 18 gekennzeichnet ist.

Die Stehlasche 18 dient dazu, den Haken 17 von oben, beispielsweise von außerhalb des Schachtes, schwenken zu können und zwischen seiner in Fig. 3 dargestellten Riegelstellung und einer Freigabestellung bewegen zu können, in welcher der Haken 17 in einer Schwenkstellung steht, in welcher er sich außer Eingriff mit dem Halter 16 befindet.

Abweichend von dem dargestellten Ausführungsbeispiel kann vorgesehen sein, dass das gebogene Blechteil, welches den Haken 17 und die aufwärts gebogene Stehlasche 18 bildet, zusätzlich auch einen nach unten abgewinkelten Abschnitt aufweisen kann. Dieser nach unten verlaufende Abschnitt ist so ausgestaltet, dass er mit dem Festteil 2 in Kontakt kommt, wenn der Haken 17 in seine Freigabestellung geschwenkt wird. Der nach unten abgewinkelte Abschnitt kann dabei keilförmig verlaufen, so dass mit zunehmender Schwenkbewegung das Losteil 3 stärker von dem Festteil 2 nach oben abgehoben wird. Dies erleichtert es, die Rohrleitungskupplung 1 zu öffnen und das Losteil 3 von dem Festteil 2 zu trennen, auch wenn die Rohrleitungskupplung 1 über längere Zeit geschlossen war und sich möglicherweise Verkrustungen an oder zwischen den beiden Los- und Festteilen 3 und 2 angelagert haben, die das Trennen dieser beiden Bauteile erschweren.

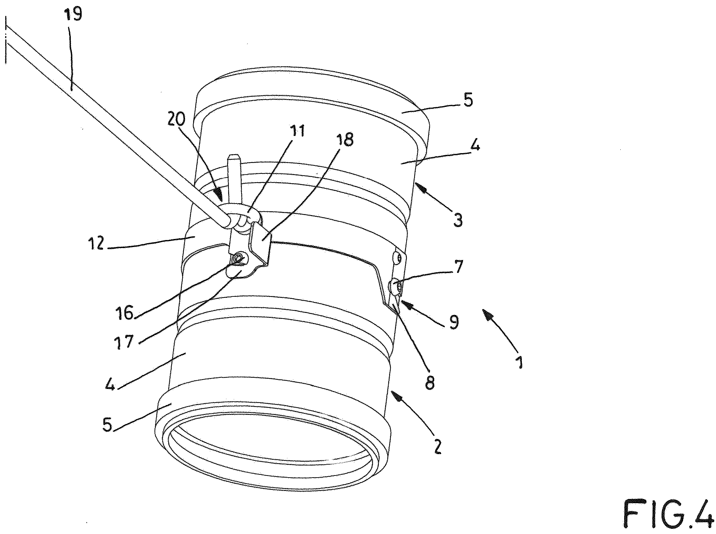

Fig. 4 zeigt ein drittes Ausführungsbeispiel einer Rohrleitungskupplung 1, welches im Wesentlichen dem Ausführungsbeispiel der Fig. 3 entspricht. Im Unterschied zu Fig. 3 ist bei dem Ausführungsbeispiel der Fig. 4 die Stehlasche 18 des Hakens 17 nicht an dem Ende der Blechlasche vorgesehen, welches dem Schwenklager des Hakens 17 gegenüberliegt, sondern vielmehr an einer Seite dieser Blechlasche. Dadurch, dass die Stehlasche 18 mit ihrer Fläche quer zu der Betätigungsrichtung verläuft, in welche auf die Stehlasche 18 eingewirkt wird, erleichtert diese Ausgestaltung der Stehlasche 18 die Betätigung des Hakens 17, um diesen in seine Riegelstellung oder seine Freigabestellung schwenken zu können.

Weiterhin ist in Fig. 4 eine Hakenstange 19 ersichtlich, die sich von der Rohrleitungskupplung 1 nach oben erstreckt. Sie kann entweder direkt, oder mithilfe eines oder mehrerer Verlängerungsstücke, bis aus dem Schacht heraus verlaufen, so dass eine Handhabung des Losteils 3 von außerhalb des Schachtes möglich ist. An ihrem unteren Ende bildet die Hakenstange 19 einen Hakenabschnitt 20, der sich bei der in Fig. 4 dargestellten Situation durch die Ringöse 11 erstreckt, um das Losteil 3 anheben oder absenken zu können. Da die Ringöse 11 fest verbunden, z.B. verschweißt ist mit dem Blechteil, welches den Haken 17 und die Stehlasche 18 bildet, kann die Verriegelungsbewegung oder die Öffnungsbewegung des Hakens 17 dadurch bewirkt werden, dass eine Drehbewegung der Hakenstange 19 um ihre Längsachse unmittelbar auf die Ringöse 11 übertragen wird.

### Bezugszeichen:

- 1: Rohrleitungskupplung
- 2: Festteil
- 3: Losteil
- 4: Rohrstutzen
- 5: Kragen
- 6: Dichtfläche
- 7: Vorsprung
- 8: Lasche
- 9: Schlitz
- 10: Handhabungsanschluss
- 11: Ringöse
- 12: Bügel
- 14: Anschlag
- 15: Aussparung
- 16: Halter
- 17: Haken
- 18: Stehlasche
- 19: Hakenstange
- 20: Hakenabschnitt

## Patentansprüche

1. Rohrleitungskupplung (1),
• mit einem als Festteil (2) bezeichneten ersten Kupplungselement,
das einen Rohrstutzen (4) aufweist,
• und einem zweiten Kupplungselement,
das wahlweise mit dem Festteil (2) verbindbar und als Losteil (3) bezeichnet ist,
und das ebenfalls einen Rohrstutzen (4) aufweist,
• wobei die beiden Kupplungselemente zusammenwirkende Halteelemente aufweisen,
derart, dass das Losteil (3) wahlweise in einer Haltestellung an dem Festteil (2) gehalten ist und die beiden Rohrstutzen (4) gemeinsam einen Rohrleitungsabschnitt bilden,
• und wobei die beiden Kupplungselemente zusammenwirkende Dichtflächen (6) aufweisen,
derart, dass das Losteil (3) in der Haltestellung mediendicht an dem Festteil (2) anliegt,
• und mit einem die Relativbewegung zwischen Festteil (2) und Losteil (3) quer zur Mittelachse des Rohrleitungsabschnitts begrenzenden Anschlag (14),
• und wobei das Losteil (3) einen Handhabungsanschluss (10) aufweist, der dazu bestimmt ist, eine wahlweise lösbare Verbindung mit einer das Losteil (3) haltenden und führenden Handhabe zu schaffen,
• und wobei die beiden Kupplungselemente zusammenwirkende, wahlweise lösbare Verriegelungselemente aufweisen,
welche das Losteil (3) in der Haltestellung an dem Festteil (2) verriegeln,
• und die Verriegelungselemente einen als Halter (16) bezeichneten Vorsprung an dem einen Kupplungselement und einen Haken (17) an dem anderen Kupplungselement enthalten,
wobei wenigstens eines dieser beiden Verriegelungselemente an dem zugehörigen Kupplungselement in der Art beweglich gelagert ist, dass die beiden Verriegelungselemente wahlweise zwischen einer Riegelstellung, in welcher der Haken (17) den Halter (16) hintergreift, und einer Freigabestellung beweglich sind, in welcher der Haken (17) den Halter (16) freigibt,
**dadurch gekennzeichnet,**
**dass** der Haken (17) als liegend ausgerichtete Blechlasche ausgestaltet ist,
und im Gebrauch von oben schwenkbar und zwischen seiner Riegelstellung und seiner Freigabestellung bewegbar ist,
wobei der Handhabungsanschluss (10) als Ringöse ausgestaltet ist
und mit dem Haken (17) fest verbunden ist.

2. Rohrleitungskupplung nach Anspruch 1,
**dadurch gekennzeichnet,**
**dass** die beiden Kupplungselemente zusammenwirkende Führungselemente aufweisen,
welche das an das Festteil (2) angenäherte Losteil (3) auf einer definierten Bewegungsbahn bis in die Haltestellung führen.

3. Rohrleitungskupplung nach Anspruch 2,
**dadurch gekennzeichnet,**
**dass** die Führungselemente einen Vorsprung (7) an dem einen Kupplungselement und einen Schlitz (9) an dem anderen Kupplungselement enthalten.

4. Rohrleitungskupplung nach Anspruch 2 oder 3,
**dadurch gekennzeichnet,**
**dass** jeweils wenigstens zwei Führungselemente am Umfang der beiden Kupplungselemente verteilt angeordnet sind.

5. Rohrleitungskupplung nach einem der vorhergehenden Ansprüche,
**dadurch gekennzeichnet,**
**dass** der Haken eine aufwärts gebogene Stehlasche (18) und einen nach unten abgewinkelten Abschnitt aufweist.

6. Rohrleitungskupplung nach einem der vorhergehenden Ansprüche,
**dadurch gekennzeichnet,**
**dass** der Anschlag (14) unten am Festteil (2) oder oben am Losteil (3) angeordnet ist.

7. Rohrleitungskupplung nach einem der vorhergehenden Ansprüche,
**dadurch gekennzeichnet,**
**dass** die zusammenwirkenden Dichtflächen (6) der beiden Kupplungselemente eine Dichtebene definieren, in welcher die beiden zusammenwirkenden Dichtflächen (6) einander anliegen, wobei sich die Dichtebene quer zur Mittelachse des Rohrleitungsabschnitts erstreckt.

8. Rohrleitungskupplung nach einem der vorhergehenden Ansprüche,
**dadurch gekennzeichnet,**
**dass** das Festteil (2) als Adapter ausgestaltet ist,
mit einem Kragen (5), der zum mediendichten Anschluss an einen in einem Schacht befindlichen Stutzen bestimmt ist.

9. Rohrleitungskupplung nach einem der vorhergehenden Ansprüche,
**dadurch gekennzeichnet,**
**dass** das Festteil (2) mit einem Anschlussstutzen verbunden ist, wobei der Anschlussstutzen dazu dient, ein Seitenrohr mediendicht an einen Schacht oder an ein Hauptrohr anzuschließen.

10. Rohrleitungskupplung nach einem der vorhergehenden Ansprüche,
**dadurch gekennzeichnet,**
**dass** das Losteil (3) einen Gegenstand trägt, welcher in einem Schacht oder in einem Rohr anzuordnen ist.

11. Verwendung einer Rohrleitungskupplung nach einem der vorhergehenden Ansprüche in einem Schacht,
wobei das Festteil zum Verbleib im Schacht bestimmt ist, und der Handhabungsanschluss (10) dazu bestimmt ist, eine wahlweise lösbare Verbindung mit einer das Losteil (3) im Schacht haltenden und führenden Handhabe zu schaffen.

12. Verwendung nach Anspruch 11,
**dadurch gekennzeichnet,**
**dass** die Rohrleitungskupplung (1) nach Anspruch 8 ausgestaltet ist
und der Kragen (5) zum mediendichten Anschluss an einen im Schacht befindlichen Stutzen bestimmt ist.

13. Verwendung nach Anspruch 11 oder 12,
**dadurch gekennzeichnet,**
**dass** die beiden Rohrstutzen (4) des Losteils (3) und des Festteils (2) gemeinsam einen Rohrleitungsabschnitt zur Führung eines Mediums bilden.

14. Verwendung nach einem der Ansprüche 11 bis 13,
**dadurch gekennzeichnet,**
**dass** der Handhabungsanschluss (10) an einem Verlängerungselement angeordnet ist, welches den Handhabungsanschluss (10) beabstandet von dem Losteil (3) hält.

## Claims

1. Pipeline coupling (1),
• having a first coupling element referred to as a fixed part (2),
which has a pipe connector (4),
• and a second coupling element,
which can be selectively connected to the fixed part (2) and is referred to as a movable part (3),
and which likewise has a pipe connector (4),
• wherein the two coupling elements have interacting holding elements,
such that the movable part (3) is selectively held in a holding position on the fixed part (2) and the two pipe connectors (4) together form a pipeline portion,
• and wherein the two coupling elements have interacting sealing surfaces (6),
such that the movable part (3) bears against the fixed part (2) in a media-tight manner in the holding position,
• and having a stop (14) limiting the relative movement between the fixed part (2) and movable part (3) transversely to the central axis of the pipeline portion,
• and wherein the movable part (3) has a handling connection (10), which is intended to provide a selectively releasable connection to a handle that holds and guides the movable part (3),
• and wherein the two coupling elements have interacting, selectively releasable locking elements, which lock the movable part (3) to the fixed part (2) in the holding position,
• and the locking elements include a projection, referred to as a holder (16), on one coupling element and a hook (17) on the other coupling element,
wherein at least one of these two locking elements is movably mounted on the associated coupling element in such a manner that the two locking elements can be selectively moved between a locking position, in which the hook (17) engages behind the holder (16), and a release position, in which the hook (17) releases the holder (16),
**characterized**
**in that** the hook (17) is configured as a horizontally oriented sheet-metal tab,
and can be pivoted from above during use and moved between its locking position and its release position,
wherein the handling connection (10) is configured as an annular eyelet
and is securely connected to the hook (17).

2. Pipeline coupling according to Claim 1, **characterized**
**in that** the two coupling elements have interacting guide elements,
which guide the movable part (3), which is brought closer to the fixed part (2), along a defined movement path into the holding position.

3. Pipeline coupling according to Claim 2, **characterized**
**in that** the guide elements include a projection (7) on one coupling element and a slot (9) on the other coupling element.

4. Pipeline coupling according to Claim 2 or 3, **characterized**
**in that** at least two guide elements are in each case distributed on the circumference of the two coupling elements.

5. Pipeline coupling according to one of the preceding claims,
**characterized**
**in that** the hook has an upwardly bent vertical tab (18) and a downwardly angled portion.

6. Pipeline coupling according to one of the preceding claims,
**characterized**
**in that** the stop (14) is arranged at the bottom of the fixed part (2) or at the top of the movable part (3).

7. Pipeline coupling according to one of the preceding claims,
**characterized**
**in that** the interacting sealing surfaces (6) of the two coupling elements define a sealing plane in which the two interacting sealing surfaces (6) bear against one another, wherein the sealing plane extends transversely to the central axis of the pipeline portion.

8. Pipeline coupling according to one of the preceding claims,
**characterized**
**in that** the fixed part (2) is configured as an adapter, having a collar (5), which is intended to be connected in a media-tight manner to a connector located in a shaft.

9. Pipeline coupling according to one of the preceding claims,
**characterized**
**in that** the fixed part (2) is connected to a connecting piece, wherein the connecting piece is used to connect a side pipe in a media-tight manner to a shaft or to a main pipe.

10. Pipeline coupling according to one of the preceding claims,
**characterized**
**in that** the movable part (3) carries an object that is to be arranged in a shaft or in a pipe.

11. Use of a pipeline coupling according to one of the preceding claims in a shaft,
wherein the fixed part is intended to remain in the shaft, and the handling connection (10) is intended to provide a selectively releasable connection to a handle that holds and guides the movable part (3) in the shaft.

12. Use according to Claim 11,
**characterized**
**in that** the pipeline coupling (1) is configured according to Claim 8
and the collar (5) is intended to be connected in a media-tight manner to a connector located in the shaft.

13. Use according to Claim 11 or 12,
**characterized**
**in that** the two pipe connectors (4) of the movable part (3) and of the fixed part (2) together form a pipeline portion for guiding a medium.

14. Use according to one of Claims 11 to 13,
**characterized**
**in that** the handling connection (10) is arranged on an extension element, which holds the handling connection (10) apart from the movable part (3).

## Revendications

1. Raccord de tuyaux (1),
• comprenant un premier élément de raccordement appelé partie fixe (2),
qui comprend un embout de tuyau (4),
• et un deuxième élément de raccordement,
qui est sélectivement apte à être relié à la partie fixe (2) et qui est appelé partie mobile (3),
et qui comprend également un embout de tuyau (4),
• les deux éléments de raccordement comprenant des éléments de maintien qui coopèrent,
de telle sorte que la partie mobile (3) est sélectivement maintenue dans une position de maintien sur la partie fixe (2) et que les deux embouts de tuyaux (4) forment ensemble un tronçon de tuyau,
• et les deux éléments de raccordement comprenant des surfaces d'étanchéité (6) qui coopèrent,
de telle sorte que la partie mobile (3) repose de manière étanche contre la partie fixe (2) dans la position de maintien,
• et comprenant une butée (14) limitant le mouvement relatif entre la partie fixe (2) et la partie mobile (3) transversalement à l'axe central du tronçon de tuyau,
• et la partie mobile (3) comprenant un raccord de manipulation (10) qui est destiné à créer une liaison sélectivement libérable ayant une poignée maintenant et guidant la partie mobile (3),
• et les deux éléments de raccordement comprenant des éléments de verrouillage coopérants, sélectivement détachables,
qui verrouillent la partie mobile (3) en position de maintien sur la partie fixe (2),
• et les éléments de verrouillage comprennent une saillie appelée support (16) sur l'un des éléments de raccordement et un crochet (17) sur l'autre élément de raccordement,
au moins un de ces deux éléments de verrouillage étant monté de manière mobile sur l'élément de raccordement correspondant de telle sorte que les deux éléments de verrouillage puissent être sélectivement déplacés entre une position de verrouillage, dans laquelle le crochet (17) s'engage derrière le support (16), et une position de déverrouillage, dans laquelle le crochet (17) libère le support (16),
**caractérisé**
**en ce que** le crochet (17) est conçu sous la forme d'une languette en tôle orientée horizontalement,
et **en ce que**, lors de l'utilisation, il est apte à être pivoté par le haut et mobile entre sa position de verrouillage et sa position de déverrouillage,
le raccord de manipulation (10) étant conçu sous la forme d'un anneau
et étant relié de manière fixe au crochet (17).

2. Raccord de tuyaux selon la revendication 1, **caractérisé**
**en ce que** les deux éléments de raccordement comprennent des éléments de guidage coopérants
qui guident la partie mobile (3) en rapprochement de la partie fixe (2) sur une trajectoire de mouvement définie jusqu'à la position de maintien.

3. Raccord de tuyaux selon la revendication 2, **caractérisé**
**en ce que** les éléments de guidage comprennent une saillie (7) sur l'un des éléments de raccordement et une fente (9) sur l'autre élément de raccordement.

4. Raccord de tuyauterie selon la revendication 2 ou la revendication 3,
**caractérisé**
**en ce que** lesdits au moins deux éléments de guidage sont agencés en au moins deux groupes répartis sur la circonférence des deux éléments de raccordement.

5. Raccord de tuyaux selon l'une des revendications précédentes,
**caractérisé**
**en ce que** le crochet comprend une languette verticale (18) recourbée vers le haut et une partie coudée vers le bas.

6. Raccord de tuyaux selon l'une des revendications précédentes,
**caractérisé**
**en ce que** la butée (14) est agencée en bas sur la partie fixe (2) ou en haut sur la partie mobile (3).

7. Raccord de tuyaux selon l'une des revendications précédentes,
**caractérisé**
**en ce que** les surfaces d'étanchéité (6) coopérantes des deux éléments de raccordement définissent un plan d'étanchéité dans lequel les deux surfaces d'étanchéité (6) coopérantes sont en application l'une contre l'autre, le plan d'étanchéité s'étendant transversalement à l'axe médian de la section de tuyau.

8. Raccord de tuyaux selon l'une des revendications précédentes,
**caractérisé**
**en ce que** la partie fixe (2) est conçue sous la forme d'un adaptateur, ayant un collier (5) qui est destiné à être raccordé de manière étanche à un manchon situé dans un regard.

9. Raccord de tuyaux selon l'une des revendications précédentes,
**caractérisé**
**en ce que** la partie fixe (2) est reliée à un raccord, le raccord servant à raccorder un tuyau latéral de manière étanche à un regard ou à un tuyau principal.

10. Raccord de tuyaux selon l'une des revendications précédentes,
**caractérisé**
**en ce que** la partie mobile (3) porte un objet qui doit être agencé dans un regard ou dans un tuyau.

11. Utilisation d'un raccord de tuyaux selon l'une des revendications précédentes dans un regard,
la partie fixe étant destinée à rester dans le regard et le raccord de manipulation (10) étant destiné à créer une liaison sélectivement libérable avec une poignée qui maintient et guide la partie mobile (3) dans le regard.

12. Utilisation selon la revendication 11,
**caractérisée**
**en ce que** le raccord de tuyaux (1) est conçu selon la revendication 8,
et **en ce que** le collier (5) est destiné au raccordement étanche à un manchon situé dans le regard.

13. Utilisation selon la revendication 11 ou la revendication 12,
**caractérisée**
**en ce que** les deux embouts de tuyau (4) de la partie mobile (3) et de la partie fixe (2) forment ensemble un tronçon de tuyau pour le guidage d'un fluide.

14. Utilisation selon l'une des revendications 11 à 13, **caractérisée**
**en ce que** le raccord de manipulation (10) est agencé sur un élément d'extension qui maintient le raccord de manipulation (10) à distance de la partie mobile (3).
